# EUROPEAN PATENT APPLICATION

(11) **EP 1 798 677 A1**
(43) Date of publication of application: **20.06.2007**
(21) Application number: 05292519.5
(22) Date of filing: 29.11.2005
(51) Int. Cl.: G06Q 10/00

(54) **Context aware message notification**

(71) Applicant: SAP AG, 69190 Walldorf (DE)
(72) Inventor: Hebert, Cedric R., 06250 Mougins (FR); Gomez, Laurent Y., Le Cannet, 06110 (FR); Ulmer, Cedric S., Nice, 06000 (FR); Wrona, Konrad, Le Velleda, Nice 06000 (FR)
(74) Representative: Müller-Boré & Partner Patentanwälte

(57) **Abstract**

The invention relates to a method for managing message notification to a user, comprising the steps of:
- receiving a message addressed to the user;
- obtaining context information based on the context the user is in;
- obtaining a user's preference based on the obtained context information;
- depending on the obtained user's preference, selectively generating and delivering a message notification to the user for notifying the user of the received message.

Moreover, the invention relates to an apparatus for managing message notification to a user.

## Description

### FIELD OF THE INVENTION

The present invention relates to the field of message notification. In particular, the present invention relates to the management of message notification to a user.

### BACKGROUND AND STATE OF THE ART

Messaging applications such as Microsoft Outlook, MSNMessager, or Gmail offer the possibility to the user to receive a notification when a new email message is received. Every time the user receives an incoming message, a notification is generated and delivered to the user.

In the Context Aware Cell Phone Project (http://www.media.mit.edu/wearables/mithril/phone.html) there is developed a mobile phone which changes its profile according e.g. the location the user is in.

"Latte, Location and Time Email Trigerring" (https://www.cs.tcd.ie/publications/tech-reports/reports.04/TCD-CS-2004-32.pdf) describes context aware messaging for e-mail systems. The goal is to deliver contextually valid messages to the reight entities at the appropriate time.

"Mobile Context Aware Systems" (http://www.cs.bham.ac.uk/~rxb/Online%20papers/context.pdf) discloses a mobile phone scenario, where the mobile phone is aware of a user's context and transmits information suitable to the user's context.

"Location History in a Low-cost Context Awareness Environment" (http://crpit.com/confpapers/CRPITV21WMantoro.pdf) addresses the problem of determining how to deliver an incoming message notification, depending on physical and social location of the addresses.

### SUMMARY OF THE INVENTION

It is therefore an aspect of the present invention to provide an improved method and an apparatus for managing message notification to a user.

This aspect is achieved by a method for managing message notification to a user according to independent claim 1, a computer readable storage medium according to claim 10, a computer program product according to claim 11, and an apparatus for managing message notification to a user according to independent claim 12.

A method for managing message notification to a user, may comprise the steps of:
- receiving a message addressed to the user;
- obtaining or acquiring context information based on the context the user is in;
- obtaining or acquiring a user's preference based on the obtained context information;
- depending on the obtained user's preference, selectively generating and delivering a message notification to the user for notifying the user of the received message

In particular, the step of selectively generating and delivering a message notification may be only performed if the user's preference indicates that a message notification should be performed.

Context is hereby understood as being any information which can be used to characterize the state of an entity, like the user.

The user's preference may be set in advance.

A message notification may be different from the message itself. In particular, by a message notification, a user can be notified that a new message has been received. In the message notification it can be e.g. indicated from whom the message was received and what the subject of the message is. The entire message may be viewed e.g. by clicking on the message notification or opening the message application and selecting the respective message.

The steps of obtaining context information and obtaining the user's preference may be performed periodically, wherein these steps can be performed at least once when the system is started. Moreover, the steps of obtaining context information and obtaining the user's preference may be performed before or after a message is received. Furthermore, the steps of obtaining context information and obtaining the user's preference may be performed more often than step of receiving.

The method may further comprise a step of setting a message notification function depending on the obtained user's preference and the step of selectively generating and delivering a message notification is performed depending on the set message notification function.

The step of setting the message notification function may be performed by an API (application programming interface or application program interface), a modification of a properties file or native methods.

The steps of obtaining context information and obtaining the user's preference may be performed substantially every time a message is received.

The step of obtaining context information may comprise determining at least one of location information, environmental information, temporal information, user information and computing information.

The location information may comprise information about the location of user, e.g. determined by GPS or via any other suitable network. The environmental information may comprise information relating to e.g. temperature, lightness, etc. The temporal information may comprise information relating to e.g. time, date, etc. The user information may comprise information relating to e.g. email, name, etc. The computing information may comprise information relating to e.g. IP address of the user's computer, whether a beamer plugged into the user's computer is detected, etc.

The step of delivering a message notification may comprise a step of displaying a message notification to user and/or a step of outputting a sound to the user.

The received message may be an email message or a workflow notification.

Computer-readable storage medium may store a computer program containing computer readable instructions which, when loaded and executed in a suitable computing environment, performs a method according to anyone of the preceding claims.

Computer program product may contain computer readable instructions which, when loaded and executed in a suitable computing environment, performs a method according to anyone of claims 1 to 9.

An apparatus for managing message notification to a user may comprise:
- an application program for receiving a message addressed to the user and generating and delivering message notifications to a user;
- a context aware message notification architecture comprising
- a context-aware message notification component for obtaining or acquiring context information based on the context the user is in; and
- a user preference component for obtaining or acquiring a user's preference based on the obtained context information;
wherein a message notification is selectively generated and delivered to the user depending on the obtained user's preference.

### SHORT DESCRIPTION OF THE FIGURES

Further objects, aspects and advantages of the present invention will become apparent to the person skilled in the art when studying the following detailed description, in connection with the annexed drawings, in which
- Fig. 1: shows a first example of an apparatus for managing message notification;
- Fig. 2: shows a schematic representation of a method for managing message notification performed in an apparatus according to the first example of Fig. 1;
- Fig.3: shows a second example of an apparatus for managing message notification;
- Fig.4: shows a schematic representation of a method for managing message notification according to first example of Fig. 3.

### DETAILED DESCRIPTION

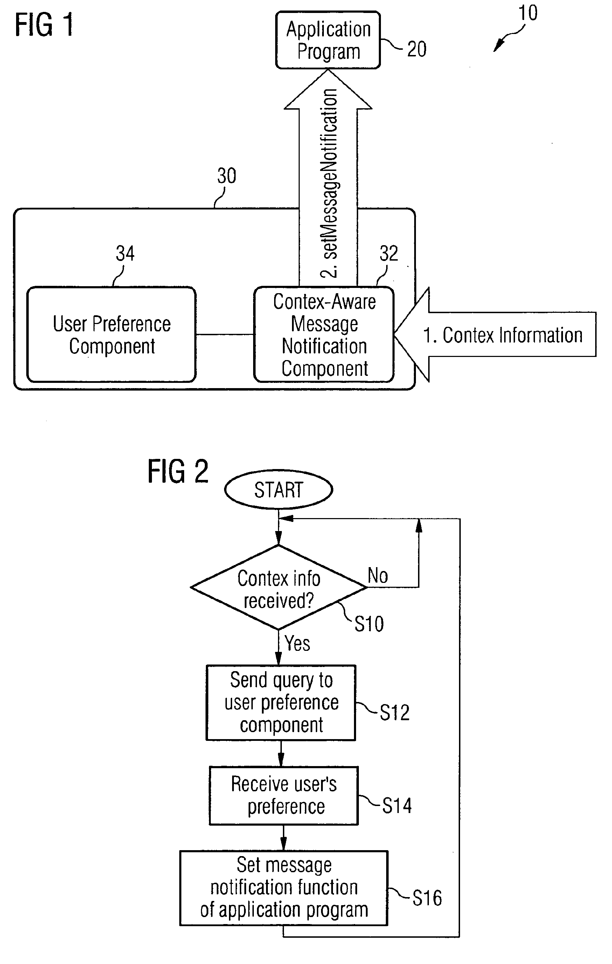

Fig. 1 shows a first example of an apparatus 10 for managing message notification.

The apparatus 10 for managing message notification to a user comprises an application program 20 and a context aware message notification architecture 30.

The application program 20 is suitable for receiving messages, e.g. email messages, addressed to the user. When a new message addressed to the user is received, the application program 20 generates and delivers a message notification to the user in order to notify the user of the received message. The message notification is performed selectively as will be described later. In particular, the message notification can be performed by a message notification function of the application program.

The context aware message notification architecture 30 comprises a context-aware message notification component 32 and a user preference component 34. The context-aware message notification component 32 is suitable for obtaining context information based on the context the user is in. Moreover, context-aware message notification component 32 can communicate with the application program 20 as will be described later. The user preference component 34 can store user's preferences for different contexts.

Context information may comprise location information, environmental information, temporal information, user information and/or computing information. The location information may comprise information about the location of user, e.g. determined by GPS or via any other suitable network. The environmental information may comprise information relating to e.g. temperature, lightness, etc. The temporal information may comprise information relating to e.g. time, date, etc. The user information may comprise information relating to e.g. email, name, etc. The computing information may comprise information relating to e.g. IP address of the user's computer, whether a beamer plugged into the user's computer is detected, etc.

As can be seen in Fig. 1, context information is received by the context-aware message notification component 32. Based on the context information and a user's preference for the respective context information, the message notification function of the application program 20 is set.

The detailed operation of the apparatus, in particular, the process performed in the context-aware message notification component 32, will be described according to the first example will be described with reference to Fig. 2. Fig. 2 shows a schematic representation of a method for managing message notification performed in an apparatus according to the first example of Fig. 1.

After starting the method, in Step S10 it is determined, whether context information is received. Such context information can e.g. be provided by the mobile phone of the user (e.g. user's location), or by a context aware architecture which collects or acquires information about the context the user is in. The context information can refer to environmental (e.g. temperature, lightness), user (e.g. email, name), computing (e.g. IP address, beamer detected), temporal information (e.g. time, date) or any other information suitable for defining a user's context.

If no context information is received ("NO" in Step S10), the process again queries whether context information is received. If context information is received ("YES" in Step S10), a query is sent to the user preference component 34 (Step S12). In the user preference component 34 it is then checked whether a preference set by the user for the particular context information is stored. In other words, the context aware message notification component checks if the received context information are referenced in the message filtering preferences stored in the user preference component.

The user's preference which matches the context information is then sent to and received by the context-aware message notification component 32 (Step S14). In case no user's preference is stored for a particular context, it can be provided that a respective message is output to the context-aware message notification component 32 (not shown).

Subsequently, the message notification function of the application program 20 is set according to the user's preference determined from the user preference component 34 (Step S16). The automatic setting of the notification function of the application program 20 or application program's customization, based on the context information, can be performed by an API (application programming interface or application program interface), by modification of properties file or by native methods. The modification of a properties file can e.g. relate to the modification of java properties files. Depending on the application model programming, the modification of native methods can be made by a model-view controller, aspect oriented programming or object oriented programming. A model-view-controller (MVC) is a software architecture that separates an application's data model, user interface, and control logic into three distinct components so that modifications to one component can be made with minimal impact to the others.

Afterwards, the process returns to step S10 and waits for new context information.

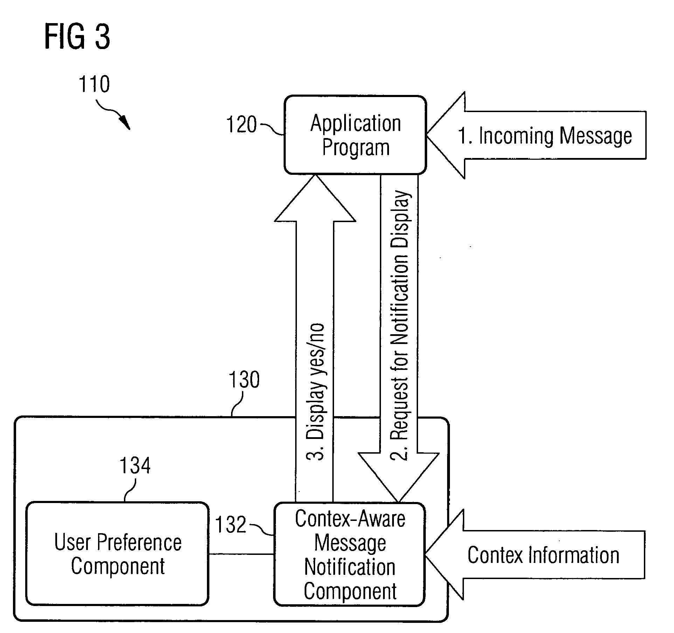

Fig. 3 shows a second example of an apparatus 110 for managing message notification.

The apparatus 110 for managing message notification to a user comprises an application program 120 and a context aware message notification architecture 130.

The application program 120 is suitable for receiving messages, e.g. email messages, addressed to the user. When a new message addressed to the user is received, the application program 120 generates and delivers a message notification to the user in order to notify the user of the received message. The message notification is performed selectively as will be described later. In particular, the message notification can be performed by a message notification function of the application program.

The context aware message notification architecture 130 comprises a context-aware message notification component 132 and a user preference component 134. The context-aware message notification component 132 is suitable for obtaining context information based on the context the user is in. Moreover, context-aware message notification component 132 can communicate with the application program 120 as will be described later. The user preference component 134 can store user's preferences for different contexts.

As can be seen in Fig. 3, context information is received by the context-aware message notification component 132. The context information may be received at any suitable time and/or when the context the user is in changes.

Furthermore, an incoming message is received by the application program 120. The application program then send a request to the context-aware message notification component 132 whether a notification for notifying the user of the received message shall be displayed to the user.

The context-aware message notification component 132 queries the user preference component 134 using the context information to determine the user's preference for the context the user is in.

Based on the context information and a user's preference for the respective context information, the information is returned to the application program 20 whether the message notification shall be displayed to the user or not. Thus, the context aware message notification architecture 130 acts as a kind of firewall for message notification display.

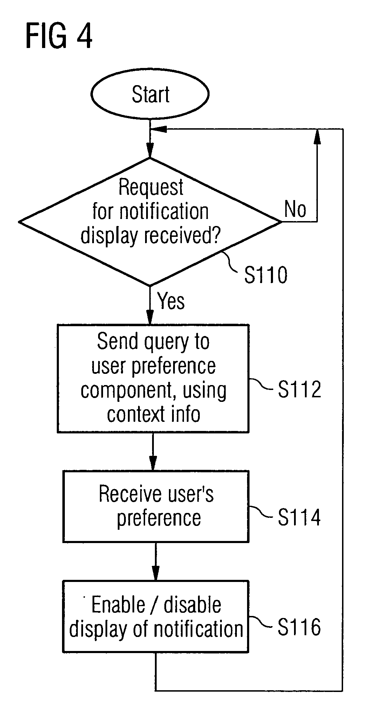

The detailed operation of the apparatus, in particular, the process performed in the context-aware message notification component 132, will be described according to the first example will be described with reference to Fig. 4. Fig. 4 shows a schematic representation of a method for managing message notification performed in an apparatus according to the first example of Fig. 3.

After starting the method, in Step S110 it is determined whether a request for notification display is received from the application program 120. If no request for notification display is received ("NO" in Step S110), the process again queries whether a request for notification display is received.

If a request for notification display is received ("YES" in Step S112), a query is sent to the user preference component 34 (Step S112). The query contains context information which had been received previously and may be stored in the context-aware message notification component 32. Moreover the query may contain message information about the message received by the application program 120. Such message information can be e.g. the sender of the message, the time the message was sent, etc. The context information can e.g. be provided by the mobile phone of the user (e.g. user's location), or by a context aware architecture which collects or acquires information about the context the user is in. The context information can refer to environmental (e.g. temperature, lightness), user (e.g. email, name), computing (e.g. IP address, beamer detected), temporal information (e.g. time, date) or any other information suitable for defining a user's context.

In the user preference component 34 it is then checked whether a preference set by the user for the particular context information is stored. The user's preference which matches the context information is then sent to and received by the context-aware message notification component 32 (Step S114). In case no user's preference is stored for a particular context, it can be provided that a respective message is output to the context-aware message notification component 32 (not shown).

In subsequent Step S116, information is returned to the application program 120 whether the message notification shall be displayed to the user or not. The returned information is based on the received context information and the respective user preference matching the context information. Moreover the returned information can also be based on the message information.

Afterwards, the process returns to step S110 and waits for a new request for notification display.

In the following examples in which the above described methods can be applied will be described.

During a meeting or if he is giving a presentation, the user does not want to be bothered with any notification of new emails or new updates. Thus, the user sets his preferences accordingly.

In the following, there is given an example for user's preference definition. In this example, the user specifies that if he is in meeting or giving a presentation, then in Outlook Express and Gmail new message notification should be disabled.

The notion of "user_in_meeting" is defined as follows:
**If** *"user_in_meeting"*
**Then**
*OutlookExpressNotificafion=NO_NOTIFICATION* **and**
*GmailNotification=NO_NOTIFICATION*

In this example, the user is considered to the Context Aware Message Notification architechture as "in meeting" if his laptop is connected to a beamer or if his agenda indicates that he is in a meeting. An inference rule can be defined to express "user_in_meeting" condition as follows:
**If**
*Laptop_connected_to_beamer* **or**
*User's_agenda_contains_meeting_appointment*
**Then** user_in_meeting

The user could e.g. also specify a further preference that as soon as the user is in meeting, he would like to be notified only of any messages coming from attendee of the meeting.

Another example is the use of the above mentioned methods in workflow notification. Workflow notifications are often made via email. For example, when an employee makes a leave request, his/her manager receives a leave request notification via email. Based on the manager's context and the urge of the leave request, the notification of the leave request is performed or not.

To sum up, the methods described above target the heavy use of email in workflow execution notification. In particular, message notification can be avoided under certain circumstances defined the user.

The invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks such as internal hard disks and removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device such as a CRT (cathode ray tube) or LCD (liquid crystal display) monitor for displaying information to the user and a keyboard and a pointing device such as a mouse or a trackball by which the user can provide input to the computer. Other kinds of devices can be used to provide for interaction with a user as well; for example, feedback provided to the user can be any form of sensory feedback, such as visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or an Web browser through which a user can interact with an implementation of the invention, or any combination of such back-end, middleware, or front-end components. The components of the system can be interconnected by any form or medium of digital data communication, e.g., a communication network. Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

### List of Reference Numerals

- 10, 110: apparatus for managing message notification
- 20, 120: application program
- 30, 130: context aware message notification architecture
- 32, 132: context-aware message notification component
- 34, 134: user preference component

## Claims

1. Method for managing message notification to a user, comprising the steps of:
- receiving a message addressed to the user;
- obtaining context information based on the context the user is in;
- obtaining a user's preference based on the obtained context information;
- depending on the obtained user's preference, selectively generating and delivering a message notification to the user for notifying the user of the received message.

2. Method according to claim 1, wherein the steps of obtaining context information and obtaining the user's preference are performed periodically.

3. Method according to claim 2, wherein the method further comprises a step of setting a message notification function depending on the obtained user's preference and the step of selectively generating and delivering a message notification is performed depending on the set message notification function.

4. Method according to claim 3, wherein the step of setting the message notification function is performed by an API, a modification of a properties file or native methods.

5. Method according to claim 1, wherein the steps of obtaining context information and obtaining the user's preference are performed substantially every time a message is received.

6. Method according to anyone of the preceding claims, wherein the step of obtaining context information comprises determining at least one of location information, environmental information, temporal information, user information and computing information.

7. Method according to anyone of the preceding claims, wherein the step of delivering a message notification comprises a step of displaying a message notification to user and/or a step of outputting a sound to the user.

8. Method according to anyone of the preceding claims, wherein the received message is an email message.

9. Method according to anyone of claims 1 to 7, wherein the received message is a workflow notification.

10. Computer-readable storage medium storing a computer program containing computer readable instructions which, when loaded and executed in a suitable computing environment, performs a method according to anyone of the preceding claims.

11. Computer program product containing computer readable instructions which, when loaded and executed in a suitable computing environment, performs a method according to anyone of claims 1 to 9.

12. Apparatus(10, 110) for managing message notification to a user, comprising:
- an application program (20, 120) for receiving a message addressed to the user and generating and delivering message notifications to a user;
- a context aware message notification architecture (30, 130) comprising
- a context-aware message notification component (32, 132) for obtaining context information based on the context the user is in; and
- a user preference component (34, 134) for obtaining a user's preference based on the obtained context information;
wherein a message notification is selectively generated and delivered to the user depending on the obtained user's preference.

## Amended claims

### Amended claims in accordance with Rule 86(2) EPC.

**1.** Method for managing message notification to a user, comprising the steps of:
- receiving a message addressed to the user;
- obtaining context information based on the context the user is in;
- obtaining a user's preference based on the obtained context information;
- depending on the obtained user's preference, selectively generating and delivering a message notification to the user for notifying the user of the received message,
wherein the received message is a workflow notification.

**2.** Method according to claim 1, wherein the steps of obtaining context information and obtaining the user's preference are performed periodically.

**3.** Method according to claim 2, wherein the method further comprises a step of setting a message notification function depending on the obtained user's preference and the step of selectively generating and delivering a message notification is performed depending on the set message notification function.

**4.** Method according to claim 3, wherein the step of setting the message notification function is performed by an API, a modification of a properties file or native methods.

**5.** Method according to claim 1, wherein the steps of obtaining context information and obtaining the user's preference are performed substantially every time a message is received.

**6.** Method according to anyone of the preceding claims, wherein the step of obtaining context information comprises determining at least one of location information, environmental information, temporal information, user information and computing information.

**7.** Method according to anyone of the preceding claims, wherein the step of delivering a message notification comprises a step of displaying a message notification to user and/or a step of outputting a sound to the user.

**8.** Computer-readable storage medium storing a computer program containing computer readable instructions which, when loaded and executed in a suitable computing environment, performs a method according to anyone of the preceding claims.

**9.** Computer program product containing computer readable instructions which, when loaded and executed in a suitable computing environment, performs a method according to anyone of claims 1 to 7.

**10.** Apparatus(10, 110) for managing message notification to a user, comprising:
- an application program (20, 120) for receiving a message addressed to the user and generating and delivering message notifications to a user;
- a context aware message notification architecture (30, 130) comprising
- a context-aware message notification component (32, 132) for obtaining context information based on the context the user is in; and
- a user preference component (34, 134) for obtaining a user's preference based on the obtained context information;
wherein a message notification is selectively generated and delivered to the user depending on the obtained user's preference, and
wherein the received message is a workflow notification.
